# EUROPÄISCHE PATENTANMELDUNG

(11) **EP 4 324 671 A2**
(43) Veröffentlichungstag der Anmeldung: **21.02.2024**
(21) Anmeldenummer: 23192290.7
(22) Anmeldetag: 19.08.2023
(51) Int. Cl.: B60J 7/16

(54) **HUBDACH FÜR EIN FREIZEITFAHRZEUG UND FREIZEITFAHRZEUG**

(30) Priorität: 19.08.2022 DE 102022121081
(71) Anmelder: Hymer GmbH & Co. KG, 88339 Bad Waldsee (DE)
(72) Erfinder: Kennerknecht, Klaus, 88416 Steinhausen / Rottum (DE)
(74) Vertreter: Müller Schupfner & Partner Patent- und Rechtsanwaltspartnerschaft mbB

(57) **Zusammenfassung**

Ein Hubdach (2) für ein Freizeitfahrzeug (1), insbesondere ein Wohnmobil oder einen Wohnwagen, ist im montierten Zustand aufstellbar und in eine Endlage (3) einklappbar. Hierbei sind aufblasbare Seitenwandteile (4, 5) vorgesehen. Die Seitenwandteile (4, 5) sind so ausgestaltet, dass durch ein Aufblasen der Seitenwandteile (4,5) ein Aufstellen und durch Auslassen der Seitenwandteile (4, 5) ein Einklappen ermöglicht sind. Ferner sind Endlagenschalter (A, B) vorgesehen, durch die beim Auslassen der Seitenwandteile (4, 5) das Erreichen der Endlage (3) erfasst wird. Ferner ist ein Freizeitfahrzeug (1) mit solch einem Hubdach (2) angegeben.

## Beschreibung

Die Erfindung betrifft ein Freizeitfahrzeug, insbesondere ein Wohnmobil oder einen Wohnwagen, und ein Hubdach für solch ein Freizeitfahrzeug.

Aus der DE 10 2017 119 302 A1 ist eine Hubeinrichtung für ein aufstellbares Fahrzeugdach mit einem verlagerbaren Dachelement bekannt, wobei das Dachelement an einem eine Dachöffnung eines Fahrzeugs umgebenden Rahmen verlagerbar gelagert werden kann, so dass das Dachelement in einer Schließposition die Dachöffnung bedeckt und in einer Öffnungsposition mindestens bereichsweise von der Dachöffnung beabstandet ist. Die bekannte Hubeinrichtung weist eine Hubscherengelenkmechanik auf.

Bei herkömmlichen Aufstelldächern, insbesondere Schlafdächern, ist ein Aufstellen durch Muskelkraft und mit Unterstützung von Gasdruckfedern möglich, wobei diese gegen den Druck der Gasdruckfeder mittels Muskelkraft wieder in Fahrposition eingeklappt werden müssen.

Herkömmliche Hubdächer haben gewisse Nachteile. Bei Hubdächern mit einer Aufstellmechanik besteht der Nachteil, dass ein manueller Eingriff erforderlich ist und beispielsweise das Aufklappen aufwändig ist, wenn es gegen den Druck der Gasdruckfedern erfolgt. Bei einer Ausgestaltung mit einer Zeltbahn besteht außerdem der Nachteil, dass die Wärmeisolation gering ist.

Aufgabe der Erfindung ist es, ein Hubdach für ein Freizeitfahrzeug, insbesondere ein Wohnmobil oder einen Wohnwagen, und ein Freizeitfahrzeug mit einem Hubdach anzugeben, die eine verbesserte Ausgestaltung und Funktionsweise aufweisen. Speziell ist es eine Aufgabe der Erfindung, ein Hubdach für ein Freizeitfahrzeug und ein Freizeitfahrzeug anzugeben, die einen verbesserten Komfort ermöglichen.

Die Aufgabe wird durch ein Hubdach mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch ein Hubdach für ein Freizeitfahrzeug, insbesondere ein Wohnmobil oder einen Wohnwagen, gelöst, wobei das Hubdach im montierten Zustand aufstellbar und in eine Endlage einklappbar ist, wobei zumindest ein aufblasbares Seitenwandteil vorgesehen ist, wobei das zumindest eine Seitenwandteil so ausgestaltet ist, dass durch ein Aufblasen des zumindest einen Seitenwandteils ein Aufstellen und durch Auslassen des zumindest einen Seitenwandteils ein zumindest teilweises Einklappen ermöglicht sind, und wobei zumindest ein Endlagenschalter vorgesehen ist, durch den beim Auslassen des zumindest einen Seitenwandteils ein Einreichen der Endlage erfassbar ist.

Ferner wird die Aufgabe durch ein Freizeitfahrzeug, insbesondere ein Wohnmobil oder einen Wohnwagen, mit solch einem Hubdach gelöst.

Vorteilhaft ist es, dass durch ein Auspumpen des zumindest einen Seitenwandteils ein Einklappen ermöglicht ist. Ferner ist es vorteilhaft, dass ein Zuziehmechanismus vorgesehen ist, durch den ein Zuziehen in die Endlage und vorzugsweise ein Verriegeln ermöglicht sind. Hierdurch ist ein automatisches Einklappen möglich. Ferner kann hierbei in besonders vorteilhafter Weise auf eine zusätzliche Schließmechanik verzichtet werden. Der Zuziehmechanismus kann als Zuziehmechanik ausgestaltet sein. Der Zuziehmechanismus kann das in die Endlage eingeklappte Seitenwandteil dann vollständig schließen und verriegeln, um eine Fahrt mit dem Fahrzeug zu ermöglichen.

Vorteilhaft ist es, dass zumindest beim Einklappen ein Druck in dem zumindest einen Seitenwandteil erfasst wird und dass zumindest eine Steuerung erfasst, ob beim Unterschreiten eines gewissen niedrigen Druckniveaus, insbesondere bei einem Unterdruck, in dem zumindest einen Seitenwandteil der Endlagenschalter das Erreichen der Endlage erfasst. Auf diese Weise kann erfasst werden, ob die Funktionsweise im Rahmen einer vorgegebenen und normalen Funktionsweise ist. Speziell ist es hierbei vorteilhaft, dass das niedrige Druckniveau nicht größer als etwa 30 kPa (300 mbar) vorzugsweise nicht größer als etwa 15 kPa (150 mbar) ist.

Außerdem ist es vorteilhaft, dass die Steuerung eine sicherheitsrelevante Fehlfunktion bestimmt, wenn beim Unterschreiten des gewissen niedrigen Druckniveaus, insbesondere bei dem Unterdruck, in dem zumindest einem Seitenwandteil der Endlagenschalter das Erreichen der Endlage nicht erfasst. Beispielseise können sich Personen, insbesondere Kinder, noch im Hubdach aufhalten, wenn das Hubdach eingeklappt wird. Die sicherheitsrelevante Fehlfunktion kann dann Personenschäden verhindern. Entsprechend können beispielsweise beim Vorhandensein von Gepäck oder dergleichen im Hubdach Beschädigungen beispielsweise des Gepäcks oder auch des Hubdachs verhindert werden.

Vorteilhaft ist es ferner, dass zumindest eine aufblasbare Matratze vorgesehen ist, dass eine Ventilanordnung vorgesehen ist und dass die Ventilanordnung so ausgestaltet ist, dass ein zumindest teilweiser Druckausgleich zwischen dem zumindest einen Seitenwandteil und der zumindest einen aufblasbaren Matratze ermöglicht ist. Hierdurch kann ohne den Betrieb einer Pumpe der Druck in der Matratze erhöht werden, falls dieser unter einen gewissen, insbesondere von einem Nutzer einstellbaren, Druck fällt. Diese erhöht den Komfort, da der Druckausgleich zumindest weitgehend geräuschlosch erfolgen kann.

Ferner ist es vorteilhaft, dass ein Ventilanordnung vorgesehen ist. Hierbei ist es bei einer möglichen Ausgestaltung vorteilhaft, dass mehrere aufblasbare Matratzen vorgesehen sind und dass die Ventilanordnung so ausgestaltet ist, dass ein zumindest teilweiser Druckausgleich zwischen den aufblasbaren Matratzen ermöglicht ist. Auf diese Weise kann beim unerwünschten Absinken des Drucks in einer Matratze Luft aus der anderen Matratze zugeführt werden. Ferner kann in einem Fall, in dem ein Nutzer den Matratzendruck einer Matratze absenkt, die Luft gegebenenfalls direkt zum weiteren Aufblasen der anderen Matratze genutzt werden. Bei einer weiteren Ausgestaltung, die zusätzlich oder alternativ zum Einsatz kommen kann, ist es vorteilhaft, dass mehrere aufblasbare Seitenwandteile vorgesehen sind und dass die Ventilanordnung so ausgestaltet ist, dass ein zumindest teilweiser Druckausgleich zwischen den aufblasbaren Seitenwandteilen ermöglicht ist. Hierdurch kann beim Absinken des Luftdrucks in einem Seitenwandteil relativ zu zumindest einem anderen Seitenwandteil ein Druckausgleich geschaffen werden, der das Hubdach in einer ausreichend aufgestellten Position hält. Hierdurch kann insbesondere über Nacht das Nachpumpen mit einer Pumpe, die Geräusche verursacht, vermieden oder zumindest im Umfang reduziert werden.

Vorteilhaft ist es auch, dass zumindest eine Pumpe, insbesondere eine Ringspaltpumpe, vorgesehen ist und dass die Ringspaltpumpe im montierten Zustand entfernt zu dem Seitenwandteil, insbesondere in einem Unterboden des Freizeitfahrzeugs, unterbringbar ist. Somit kann die Ringspaltpumpe im montierten Zustand insbesondere in einem Unterboden des Freizeitfahrzeugs unterbringbar sein. Dies hat den Vorteil, dass die Geräuschemissionen der Pumpe nur im reduzierten Ausmaß im Hubdach wahrgenommen werden können. Im Unterboden kann gegebenenfalls auch eine Geräuschisolierung untergebracht werden, um die Geräusche der Ringspaltpumpe zu dämpfen.

Ferner ist es vorteilhaft, dass eine klappbare Dachschale vorgesehen ist und dass ein Aufenthaltsraum, insbesondere ein Schlafraum, der im aufgestellten Zustand des Hubdachs besteht, zwischen der Dachschale und einem Dachrahmen des Freizeitfahrzeugs umfänglich von dem zumindest einen aufblasbaren Seitenwandteil umschlossen ist. Das aufblasbare Seitenwandteil kann dadurch in vorteilhafter Weise eine Wärmeisolation ermöglichen. Das aufblasbare Seitenwandteil kann auch aus einem Dropstitchmaterial gebildet sein.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einem Hubdach in einer schematischen, räumlichen Darstellung entsprechend einem Ausführungsbeispiel der Erfindung;
- Fig. 2: das in Fig. 1 gezeigte Freizeitfahrzeug in einer schematischen Draufsicht zur Erläuterung der Funktionsweise des Ausführungsbeispiels der Erfindung und
- Fig. 3: ein Blockschaltbild zur Erläuterung der Funktionsweise des in Fig. 1 gezeigten Freizeitfahrzeugs entsprechend dem Ausführungsbeispiel.

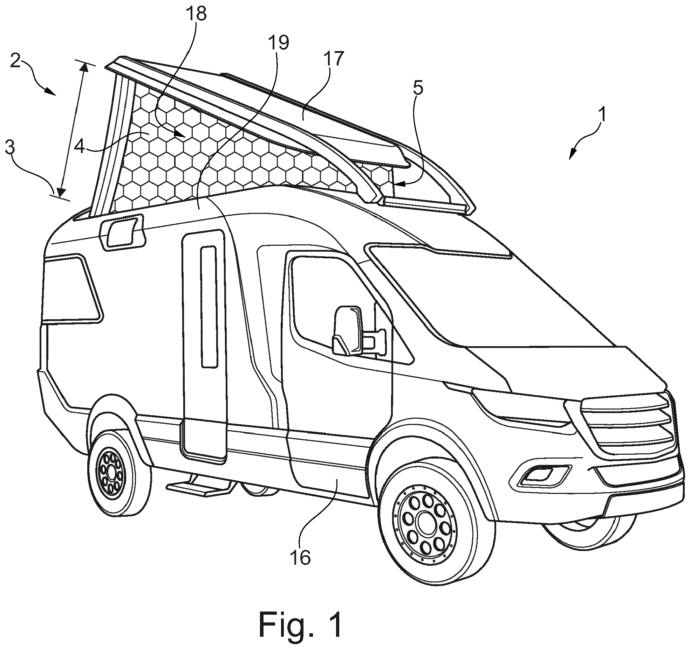

Fig. 1 zeigt ein Freizeitfahrzeug 1 in einer schematischen, räumlichen Darstellung entsprechend einem Ausführungsbeispiel der Erfindung. Das Freizeitfahrzeug 1 kann insbesondere als Wohnmobil oder Wohnwagen ausgestaltet sein. In diesem Ausführungsbeispiel ist das Freizeitfahrzeug 1 als Wohnmobil ausgestaltet. Das Freizeitfahrzeug 1 weist ein Hubdach 2 auf.

Das Hubdach 2 ist aufstellbar, wenn das Freizeitfahrzeug 1 geparkt ist, wie es in Fig. 1 gezeigt ist. Ferner kann das Hubdach 2 in eine schematisch dargestellte Endlage 3 eingeklappt werden.

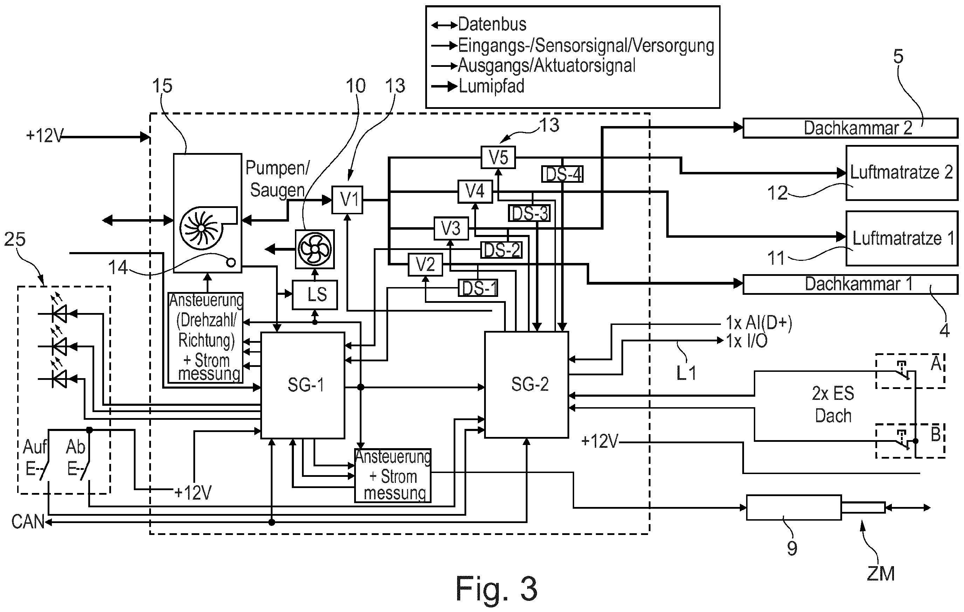

Das Hubdach 2 weist in diesem Ausführungsbeispiel mehrere aufblasbare Seitenwandteile 4, 5 auf, die als Dachkammern ausgestaltet sind. Je nach Ausgestaltung des Hubdachs 2 kann eine geeignete Zahl an aufblasbaren Seitenwandteilen 4, 5 vorgesehen sein. Die Seitenwandteile 4, 5 sind so ausgestaltet, dass durch Aufblasen der Seitenwandteile 4, 5 ein Aufstellen des Hubdachs 2 möglich ist. Hierdurch kann eine separate Aufstellmechanik oder dergleichen eingespart werden. Ferner kann durch Auslassen der Luft aus den Seitenwandteilen 4, 5 das Einklappen in die Endlage 3 erfolgen. Hierbei sind Endlagenschalter A, B (Fig. 3) vorgesehen, über die erfasst wird, ob beim Einklappen die Endlage 3 des Hubdachs 2 erreicht wird.

Beim Einklappen erfolgt ein Auspumpen der Seitenwandteile 4, 5 in die Endlage 3. Ferner kann über einen Zuziehmechanismus ZM (Fig. 3) noch ein Zuziehen in die Endlage 3 und ein Verriegeln in der Endlage 3 erfolgen. Somit ist gewährleistet, dass das Hubdach 2 zuverlässig in die Endlage 3 bringbar ist und eine sichere Fahrt ermöglicht wird. Sowohl das Aufstellen als auch Einklappen können hierbei zumindest weitgehend automatisiert erfolgen. Dies bedeutet, dass insbesondere ein händisches Eingreifen durch Muskelkraft eines Nutzers nicht erforderlich ist. Dies schließt nicht aus, dass aus Sicherheitsgründen das Aufstellen und Einklappen des Hubdachs 2 von einem Nutzer zu beobachten ist und gegebenenfalls der Nutzer zunächst bestätigt, dass beispielsweise beim Einklappen keine Personen oder Gegenstände im ausgeklappten Hubdach 2 vorhanden sind.

Beim Einklappen des Hubdachs 2 wird ein Druck in den Seitenwandteilen 4, 5 erfasst. Ferner wird mit Steuerungen SG-1, SG-2 erfasst, ob beim Einklappen ein gewisses niedriges Druckniveau in den Seitenwandteilen 4, 5 erreicht ist. Es kann sich hierbei auch um einen Unterdruck handeln. Ferner erfassen beim Einklappen die Endlagenschalter A, B, ob das Hubdach 2 bereits seine Endlage 3 erreicht hat. Bei einer bevorzugten Ausgestaltung ist das niedrige Druckniveau nicht größer als etwa 30 kPa (300 mbar), insbesondere 15 kPa (50 mbar).

Bei einer besonders bevorzugten Ausgestaltung kann hierdurch eine sicherheitsrelevante Fehlfunktion bestimmt werden. Diese sicherheitsrelevante Fehlfunktion kann insbesondere dann ausgelöst werden, wenn sich noch Personen oder Gegenstände in dem Hubdach 2 befinden, wenn die Seitenwandteile 4, 5 ausgepumpt werden. Hierfür bestimmt zumindest eine Steuerung SG-1, SG-2, ob gleichzeitig zwei Bedingungen vorliegen. Die eine Bedingung ist das Unterschreiten des gewissen niedrigen Druckniveaus in zumindest einem Seitenwandteil 4, 5. Die andere Bedingung ist, dass bezüglich zumindest eines Seitenwandteils 4, 5 der jeweilige Endlagenschalter A, B das Erreichen der Endlage 3 nicht erfasst. Dies bedeutet, dass trotz der aufgrund des niedrigen Druckniveaus zu erwartenden Endlage 3 diese nicht erreicht ist, so dass hierfür andere Gründe vorliegen. Hierdurch kann die Sicherheit wesentlich verbessert werden.

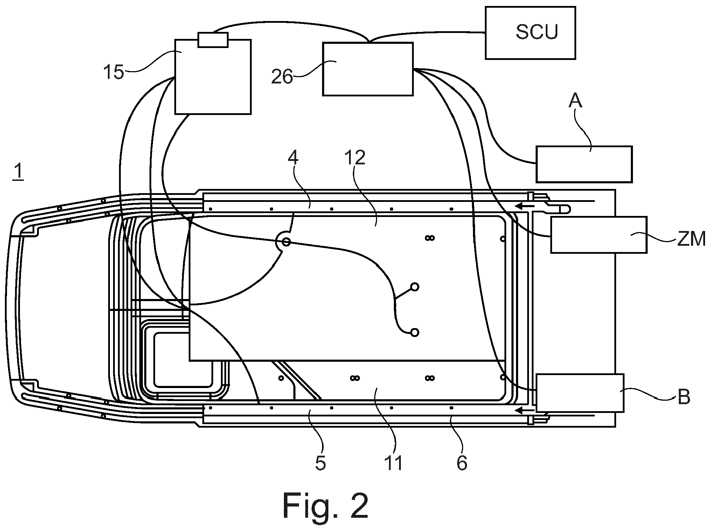

Fig. 2 zeigt das in Fig. 1 dargestellte Freizeitfahrzeug 1 in einer schematischen Darstellung von oben. Wenn das Hubdach 2 aufgestellt ist, dann ist die Zündung des Freizeitfahrzeugs aus. Im Hubdach 2 sind aufblasbare Matratzen 11, 12 angeordnet. Ferner ist schematisch das Luftzelt 6 dargestellt, das die Seitenwandteile 4, 5 umfasst. Die weitere Ausgestaltung des Freizeitfahrzeugs 1 und des Hubdachs 2 wird auch unter Bezugnahme auf die Fig. 3 weiter beschrieben.

Fig. 3 zeigt ein Blockschaltbild zur Erläuterung der Funktionsweise des Freizeitfahrzeugs 1 mit dem Hubdach 2. Wie es auch über dem Blockschaltbild der Fig. 3 angegeben ist, zeigen Linien mit zwei Pfeilen eine Verbindung über einen Datenbus. Eine mitteldicke Linie mit einem Pfeil zeigt eine Verbindung für ein Eingangssignal, ein Sensorsignal oder eine Versorgung an. Eine dünne Linie mit einem Pfeil zeigt ein Ausgangssignal oder ein Aktuatorsignal an. Eine dicke Linie mit einem Pfeil zeigt einen Luftpfad an.

Das Hubdach 2 des Freizeitfahrzeugs 1 umfasst eine Ventilanordnung 13, die in diesem Ausführungsbeispiel Ventile V1 bis V5 umfasst. Über das Ventil V1 kann je nach Pump- oder Saugbetrieb der Pumpe 15 ein Zustrom oder ein Abfluss von Druckluft über die Ventile V2 bis V5 gesteuert werden. Die Ventile V2 bis V5 dienen hierbei zum Aufteilen der Luft auf die Seitenwandteile 4, 5 und die Matratzen 11, 12. Ferner sind Drucksensoren DS-1 bis DS-4 vorgesehen, die jeweils den Druck in dem Seitenwandteil 4, dem Seitenwandteil 5, der Matratze 11 oder der Matratze 12 messen. Die Druckwerte werden dann an die Steuerungen SG-1, SG-2 ausgegeben. Hierbei kann die Steuerung SG-1 als Hauptsteuerung dienen, während die Steuerung SG-2 als Nebensteuerung dient. Über die Steuerung SG-1 können beispielsweise bei einer Ansteuerung der Pumpe 15 die Anzahl und Drehrichtung vorgegeben werden. Ferner kann der an der Pumpe 15 gemessene Strom an die Steuerung SG-1 ausgegeben werden. Außerdem kann ein Temperatursensor 14 an der Pumpe 15 vorgesehen sein, wobei das Temperatursignal an eine Lüftersteuerung LF für einen Lüfter 10 ausgegeben wird, der die Pumpe 15 kühlt. Das Temperatursignal des Temperatursensors 14 kann auch an die Steuerung SG-1 ausgegeben werden.

Über die Ventilanordnung 13 kann ein Druckausgleich zwischen den Seitenwandteilen 4, 5 und den Matratzen 11, 12 erfolgen. Beispielsweise kann ein Druckausgleich zwischen zumindest einem Seitenwandteil 4, 5 und zumindest einer aufblasbaren Matratze 11, 12 erfolgen, wenn der Druck in der jeweiligen Matratze 11, 12 unter einen gewünschten Druck abfällt. Entsprechend kann auch ein Druckausgleich zwischen den Matratzen 11, 12 erfolgen. Ferner ist es auch möglich, dass ein Druckausgleich zwischen den Seitenwandteilen 4, 5 erfolgt, um das Hubdach 2 möglichst optimal in einem aufgeklappten Zustand zu halten, ohne dass ein Betrieb der Pumpe 15 erforderlich ist.

Die Pumpe 15 kann als Ringspaltpumpe 15 ausgebildet sein. Aufgrund der Geräuschentwicklung der Pumpe 15 ist diese vorzugsweise in einem Unterboden 16 (Fig. 1) untergebracht. Dadurch besteht ein gewisser Abstand zum Hubdach 2, so dass Geräuschemissionen im reduzierten Ausmaß im Hubdach 2 wahrnehmbar sind.

Wenn das Hubdach 2 in die Endlage 3 gelangt, dann kann insbesondere über die Strommessung, die an der Pumpe 15 erfolgt, eine Ansteuerung des Zuziehmechanismus ZM erfolgen. Hierbei kann zum einen über die Strommessung an der Pumpe 15 erkannt werden, dass ein gewisses Druckniveau unterschritten ist. Dies kann allerdings auch über die Drucksensoren DS-1 bis DS-4 erfolgen. Ist die Endlage 3 erreicht, dann kann ein Aktuator 9 des Zuziehmechanismus ZM betätigt werden.

Wird hingegen die Endlage nicht erreicht, dann kann über die Steuer SG-2 auf einer Leitung L1 ein Warnsignal ausgegeben werden. Hierdurch ist beispielsweise eine akustische und/oder optische Warnung möglich. Auch eine Warnung durch eine Vibration an einem Bediengerät ist möglich.

Wie in Fig. 1 dargestellt ist, weist das Freizeitfahrzeug 1 in diesem Ausführungsbeispiel eine klappbare Dachschale 17 auf. Im aufgestellten Zustand ist unter der Dachschale 17 ein Aufenthaltsraum 18, insbesondere ein Schlafraum 18, gebildet. Zwischen der Dachschale 17 und dem Dachrahmen 19 des Freizeitfahrzeugs 1 ist der Aufenthaltsraum 18 umfänglich von den aufgeblasenen Seitenwandteilen 4, 5 umschlossen. Wenn das Hubdach 2 eingeklappt wird, dann kann über die Warnfunktion rechtzeitig signalisiert werden, dass beispielsweise eine Person, insbesondere ein Kind, noch in dem Aufenthaltsraum 18 ist. Dadurch kann verhindert werden, dass ein Kind unbemerkt unter der klappbaren Dachschale 17 eingeklemmt wird.

Bei einer vorteilhaften Ausgestaltung kann das Hubdach 2 durch eine Applikation (App), eine Benutzeroberfläche oder dergleichen auf einem vernetzten Endgerät, beispielsweise einem Bediengerät im Freizeitfahrzeug 1 oder einer Applikation auf einem intelligenten Gerät, wie einem Mobiltelefon, vollautomatisch aufgestellt und auch wieder eingeklappt werden. Dadurch kann das Hubdach 2 vorzugsweise automatisch in Fahrposition gebracht werden. Über die aufblasbaren Seitenwandteile 4, 5, die Luftkammern umfassen und die auch gleichzeitig die Wände des Aufenthaltsraums 18 darstellen, kann das Hubdach 2 angehoben und in Position gehalten werden.

Beispielsweise kann mittels eines Tastendrucks oder durch einen Druck auf der Benutzeroberfläche eines Bediengeräts 25 ein drucküberwachtes automatisches Auf- und Abpumpen der Seitenwandteile 4, 5 und der Matratzen 11, 12 erfolgen. Die Steuerungen SG-1, SG-2 realisieren eine zentrale Dachsteuerung und können die Ansteuerung und Überwachung aller Aktoren sowie die CAN-Bus-Kommunikation mit zentralen Schnittstellen im Freizeitfahrzeug 1 und einer Sensor- und Steuereinheit (SCU) übernehmen.

Bei Betätigung eines Startknopfes auf der Benutzeroberfläche kann das so realisierte Dachsteuergerät 26 prüfen, ob die notwendigen Bedingungen erfüllt sind, um das Hubdach 2 aufzustellen. Speziell kann geprüft werden, ob das Freizeitfahrzeug sicher abgestellt ist. Dies ist beispielsweise der Fall, wenn die Geschwindigkeit des Freizeitfahrzeugs 1 Null ist und das Getriebe auf Neutral beziehungsweise in einer P-Stellung steht sowie eine Handbremse angezogen ist.

Wenn alle Eingangsbedingungen erfüllt sind, dann kann über den Aktuator 9 das Hubdach 2 entriegelt werden. Hierbei kann ein Zuziehmotor mit einem Linearzylinder zum Einsatz kommen. Dann wird die Pumpe 15 angesteuert, die als Seitenkanalverdichter ausgebildet sein kann. Ferner werden die Ventile V1, V2, V3 geöffnet, um die Seitenwandteile 4, 5 aufzupumpen. Entsprechend können durch Öffnen der Ventile V4, V5 die Matratzen 11, 12 aufgepumpt werden. Hierbei können die Seitenwandteile 4, 5 und die Matratzen 11, 12 einzeln drucküberwacht werden. Bei Erreichen des jeweils vorgegebenen Druck-Sollwertes kann das jeweilige Ventil V2 bis V5 geschlossen werden. Nach dem Schließen des letzten Ventils V2 bis V5 sowie des Ventils V1 wird die Pumpe 15 abgeschaltet. Für die Matratzen 11, 12 kann der Benutzer vorzugsweise den Druck und somit die Härte seiner Matratze 11, 12 individuell vorgeben und abspeichern. Hierbei ist es möglich, Soll-Werte zu hinterlegen, die bei jedem zukünftigen Aufpumpvorgang der jeweiligen Matratze 11, 12 als Zielwerte vorgegeben sind.

Wenn ein Nachpumpen beispielsweise einer Matratze 11, 12 notwendig ist und ausreichend Druck in den Seitenwandteilen 4, 5 vorhanden ist, dann kann durch Ansteuern der entsprechenden Ventile V2 bis V5 Luft umverteilt werden, ohne dass die Pumpe 15 angesteuert werden muss. Dies vermeidet Geräuschemissionen, was insbesondere während der Nachtruhe relevant ist.

Der Einklapp-Vorgang kann in entsprechender Weise verlaufen. Hier kann der Nutzer zunächst bestätigen, dass sich keine Personen oder Gegenstände mehr auf den Matratzen 11, 12 beziehungsweise dem Bewegungsbereich des Hubdaches 2 befinden. Anschließend können alle Luftkammern aktiv abgepumpt werden, um das ordnungsgemäße Zusammenfalten der Luftkammern zu gewährleisten. Mit dem Entweichen der Luft aus den Seitenwandteilen 4, 5 senkt sich die Dachschale 17 immer weiter ab. Das korrekte Erreichen der Endposition des Hubdaches 2 wird mittels der Endlagenschalter A, B detektiert. Die Endlagenschalter A, B können Kontakte und/oder Annäherungsschalter sein. Dann kann der Aktuator 9 des Zuziehmechanismus ZM angesteuert werden, um das Hubdach 2 in seine Fahrstellung zu drücken und zu verriegeln.

Der jeweilige Aufstell- und Einklappvorgang endet automatisch, wenn die jeweiligen Bedingungen erfüllt sind. Hierbei muss der Nutzer vorzugsweise nicht manuell eingreifen, um das Hubdach 2, insbesondere die Seitenwandteile 4, 5 und die Matratzen 11, 12 aufzubauen beiziehungsweise vor der Abfahrt wieder abzubauen beziehungsweise einzuklappen. Somit kann das Hubdach 2 insbesondere automatisch schlaffertig gemacht werden.

Das Dachsteuergerät 26 kann gegebenenfalls auch bei anderen Anwendungen im Freizeitfahrzeug 1 zum Einsatz kommen. Neben dem Einsatz bei einem Hubdach 2 kann das Dachsteuergerät 26 gegebenenfalls auch bei anderen Wohnraumerweiterungen mittels Luftkammern in Reisemobilen, Campervans und Caravans benutzt werden. Das Freizeitfahrzeug 1 kann insbesondere ein Reisemobil, ein Campervan oder ein Caravan sein. Somit kann ein Luftkissen-Schlaf-/Aufstelldach mit elektrisch gesteuerter Aufstellautomatik realisiert werden.

Die Erfindung ist nicht auf die beschriebenen Ausführungsbeispiele beschränkt.

## Patentansprüche

1. Hubdach (2) für ein Freizeitfahrzeug (1), insbesondere ein Wohnmobil oder einen Wohnwagen, wobei das Hubdach (2) im montierten Zustand aufstellbar und in eine Endlage (3) einklappbar ist,
**dadurch gekennzeichnet,**
**dass** zumindest ein aufblasbares Seitenwandteil (4, 5) vorgesehen ist, dass das zumindest eine Seitenwandteil (4, 5) so ausgestaltet ist, dass durch ein Aufblasen des zumindest eines Seitenwandteils (4, 5) ein Aufstellen und durch Auslassen des zumindest einen Seitenwandteils (4, 5) ein zumindest teilweises Einklappen ermöglich sind, und dass zumindest Endlagenschalter (A, B) vorgesehen ist, durch den beim Auslassen des zumindest einen Seitenwandteils (4, 5) ein Erreichen der Endlage (3) erfassbar ist.

2. Hubdach nach Anspruch 1,
**dadurch gekennzeichnet,**
**dass** durch ein Auspumpen des zumindest einen Seitenwandteils (4, 5) ein Einklappen ermöglicht ist und/oder dass ein Zuziehmechanismus (ZM) vorgesehen ist, durch den ein Zuziehen in die Endlage (3) und vorzugsweise ein Verriegeln ermöglicht sind.

3. Hubdach nach Anspruch 1 oder 2,
**dadurch gekennzeichnet,**
**dass** zumindest beim Einklappen ein Druck in dem zumindest einen Seitenwandteil erfasst wird und dass zumindest eine Steuerung (SG-1 , SG-2) erfasst, ob beim Unterschreiten eines gewissen niedrigen Druckniveaus, insbesondere bei einem Unterdruck, in dem zumindest einen Seitenwandteil (4, 5) der Endlagenschalter (A, B) das Erreichen der Endlage (3) erfasst.

4. Hubdach Anspruch 3,
**dadurch gekennzeichnet,**
**dass** das gewisse niedrige Druckniveau nicht größer als etwa 30 kPa, vorzugsweise nicht größer als etwa 15 kPa, ist.

5. Hubdach nach Anspruch 3 oder 4,
**dadurch gekennzeichnet,**
**dass** die Steuerung (SG-1, SG-2) eine sicherheitsrelevante Fehlfunktion bestimmt, wenn beim Unterschreiten des gewissen niedrigen Druckniveaus, insbesondere bei dem Unterdruck, in dem zumindest einem Seitenwandteil (4, 5) der Endlagenschalter (A, B) das Erreichen der Endlage (3) nicht erfasst.

6. Hubdach nach einem der Ansprüche 1 bis 5,
**dadurch gekennzeichnet,**
**dass** zumindest eine aufblasbare Matratze 11, 12 vorgesehen ist, dass eine Ventilanordnung (13) vorgesehen ist und dass die Ventilanordnung (13) so ausgestaltet ist, dass ein zumindest teilweiser Druckausgleich zwischen dem zumindest einen Seitenwandteil (4, 5) und der zumindest einen aufblasbaren Matratze (11, 12) ermöglicht ist.

7. Hubdach nach einem der Ansprüche 1 bis 6,
**dadurch gekennzeichnet,**
**dass** eine Ventilanordnung (13) vorgesehen ist und
**dass** mehrere aufblasbare Matratzen (11, 12) vorgesehen sind und dass die Ventilanordnung (13) so ausgestaltet ist, dass ein zumindest teilweiser Druckausgleich zwischen den aufblasbaren Matratzen (11, 12) ermöglicht ist, und/oder
**dass** mehrere aufblasbare Seitenwandteile (4, 5) vorgesehen sind und dass die Ventilanordnung (13) so ausgestaltet ist, dass ein zumindest teilweiser Druckausgleich zwischen den aufblasbaren Seitenwandteilen (4, 5) ermöglicht ist.

8. Hubdach nach einem der Ansprüche 1 bis 7,
**dadurch gekennzeichnet,**
**dass** zumindest eine Pumpe (15), insbesondere eine Ringspaltpumpe (15), vorgesehen ist und dass die Pumpe (15) im montierten Zustand entfernt zu dem zumindest einem Seitenwandteil (4, 5), insbesondere in einem Unterboden (16) des Freizeitfahrzeugs (1), unterbringbar ist.

9. Hubdach nach einem der Ansprüche 1 bis 8,
**dadurch gekennzeichnet,**
**dass** eine klappbare Dachschale (17) vorgesehen ist und dass ein Aufenthaltsraum (18), insbesondere ein Schlafraum (18), der im aufgestellten Zustand besteht, zwischen der Dachschale (17) und einem Dachrahmen (19) des Freizeitfahrzeugs (1) umfänglich von dem zumindest einen aufblasbaren Seitenwandteil (4, 5) umschlossen ist.

10. Freizeitfahrzeug (1), insbesondere Wohnmobil oder Wohnwagen, mit einem Hubdach (2) nach einem der Ansprüche 1 bis 9.
